# EUROPÄISCHE PATENTSCHRIFT

(11) **EP 2 199 692 B1**
(45) Veröffentlichungstag und Bekanntmachung des Hinweises auf die Patenterteilung: **04.11.2015**
(21) Anmeldenummer: 09175231.1
(22) Anmeldetag: 06.11.2009
(51) Int. Cl.: F24D 12/02, F24D 15/04, F24H 9/18

(54) **Kompakt-Heizzentrale**
Compact heating system
Centrale de chauffage compacte

(30) Priorität: 15.12.2008 DE 202008016443 U
(43) Veröffentlichungstag der Anmeldung: 23.06.2010
(73) Patentinhaber: MHG Heiztechnik GmbH, 21244 Buchholz in der Nordheide (DE)
(72) Erfinder: Niedermayer, Markus, 21244 Buchholz (DE); Gil-Söffker, Juan-Carlos, 21244 Buchholz (DE)
(74) Vertreter: Thielemann, Torge Jan

(56) Entgegenhaltungen:
- EP-A1- 1 376 025
- EP-A2- 0 857 923
- EP-A2- 2 023 047
- DE-A1- 3 116 624
- DE-U1- 8 515 625

## Beschreibung

Die Erfindung betrifft eine Kompakt-Heizzentrale für eine Heizanlage zur Wärmeenergieversorgung von Gebäuden.

Bekannte Heizanlagen bzw. -systeme für Gebäude bzw. Häuser umfassen u. a. normalerweise wenigstens einen Pufferspeicherbehälter. Derartige Pufferspeicherbehälter sind separate, in sich abgeschlossene Behälter bzw. Gefäße, in denen ein Wärmeträgermedium, beispielsweise Wasser, gespeichert bzw. aufbewahrt werden kann. Derartige Pufferspeicherbehälter weisen in der Regel ein Volumen von mehreren 100 Litern auf. Im Inneren der Pufferspeicherbehälter sind üblicherweise Wärmeübertrager vorgesehen, die die Wärmeenergie des im Pufferspeicherbehälter vorhandenen Wärmeträgermediums beispielsweise auf Heiz- oder Brauchwasserkreisläufe des Gebäudes übertragen.

Ferner umfassen Heizanlagen wenigstens eine Wärmequelle, beispielsweise einen Öl- bzw. Gaskessel, die zur Erwärmung des Wärmespeichermediums im Pufferspeicherbehälter ausgebildet und zu diesem Zweck mit Letzterem verbunden ist. Darüber hinaus gibt es weitere alternative oder zusätzliche Wärmequellen, wie beispielsweise Wärmepumpen, Solar-Kollektor-Systeme u. dgl. Im Zuge des allgemeinen Bestrebens, den Energiebedarf von Heizanlagen für Gebäude zu reduzieren, werden vermehrt, z. B. für Niedrigenergiehäuser u. dgl., Heizanlagen gefordert, bei denen zwei oder mehr Wärmequellen vorhanden sind, die in der Weise aufeinander abgestimmt sind, dass die Heizanlage zur Erwärmung des Gebäudes zunächst nur eine Wärmequelle aus dem Bereich erneuerbarer Energien verwendet und erst bei Erreichen der Leistungsgrenze zusätzlich eine zweite, in der Regel konventionelle Wärmequelle basierend auf fossilen Brennstoffen hinzuschaltet. Diese angeführten Komponenten der Heizanlage bilden bei bekannten Anlagen einzelne, separate Bauteile, für deren Installation in einem Gebäude typischerweise separate Räume, z. B. der Aufstellraum oder der Heizungsraum, vorgesehen werden, die entsprechend groß sein müssen, um sämtliche Bauteile und die die einzelnen Bauteile verbindenden Leitungen aufzunehmen. Insbesondere der Pufferspeicherbehälter weist einen hohen Platzbedarf auf.

Die DE 31 16 624 A1 offenbart ein modulares Energieversorgungssystem für Wärme und Elektrizität.

In der EP 2 023 047 A2 wird eine Heizanlage beschrieben, welche zwecks Effizienzsteigerung eines Nachschaltwärmetauschers eine Wärmepumpe enthält.

Die DE 85 15 625 U1 offenbart eine spezielle Ausführungsform eines Brennwertkessels, der eine Adsorptionswärmepumpe umfasst.

Eine mit einer Absorptionswärmepumpe ausgestaltete Heizanlage wird in der EP 0 857 923 A2 offenbart.

Die EP 1 376 025 A1 stellt den nächstliegenden Stand der Technik dar und offenbart eine Heizvorrichtung zur Raumheizung und zur Erwärmung von Brauchwasser. Die Heizvorrichtung umfasst eine brennergesteuerte Wärmeeinheit sowie eine Wärmepumpe, welche gemeinsam an wenigstens einen Wärmekreislauf gekoppelt sind.

Insgesamt ergibt sich bei den bekannten Heizanlagen ein erhöhter Raum- und Installationsbedarf, oder aber es sind bei den bekannten Heizanlagen keine alternativen oder zusätzlichen Wärmequellen vorhanden.

Daher ist es Aufgabe der vorliegenden Erfindung, den Raum- und Installationsbedarf einer Heizanlage und die damit einhergehenden Kosten zu reduzieren. Diese Aufgabe wird durch eine Kompakt-Heizzentrale mit den Merkmalen des Anspruches 1 gelöst.

Der Kerngedanke der Erfindung besteht demnach darin, eine kompakt ausgebildete Heizzentrale vorzusehen, die ein Gehäuse umfasst, innerhalb dessen ein Brennwertkessel als konventionelle Wärmequelle und die Inneneinheit einer Wärmepumpe als alternative Wärmequelle auf der Basis erneuerbarer Energien angeordnet sind. Ferner wird in dem Gehäuse der Heizzentrale kein separater Pufferspeicherbehälter vorgesehen. Dadurch, dass sämtliche genannten Komponenten der Heizanlage innerhalb eines Gehäuses in einer einzigen Heizzentrale angeordnet sind und dass in der Heizzentrale kein separater Pufferspeicherbehälter vorgesehen ist, ergibt sich eine äußerst kompakte Ausbildung der Heizzentrale. Somit ist es nun auch bei Niedrigenergiehäusern u. dgl. möglich, eine einzige, innerhalb eines Gehäuses eingeschlossene Heizzentrale im Gebäude vorzusehen, in der alle relevanten bzw. notwendigen Komponenten der Heizanlage enthalten sind. Insbesondere wird die Heizzentrale derart ausgebildet, dass auf die Vorsehung eines separaten Pufferspeicherbehälters in der Heizzentrale verzichtet werden kann. Als Puffer- bzw. Wärmespeicher wird somit bei der vorliegenden Erfindung einzig die Menge des Wärmeträgermediums (z. B. Heizwasser) verwendet, die zu einem bestimmten

Zeitpunkt durch den Körper des Heizkessels geführt wird sowie gegebenenfalls der Körper des Heizkessels selbst. Insbesondere durch zusätzliche Vorsehung eines Nachschaltwärmetauschers und einer Wärmepumpe kann auf einen separaten Pufferspeicherbehälter zur Vorhaltung einer großen Menge Wärmeträgermediums verzichtet werden. Somit wird der Platzbedarf für die Heizanlage deutlich reduziert und auch die Installation der Heizanlage bzw. - zentrale kann schneller und kostengünstiger vonstatten gehen. Eine Komplettmontage der Kompakt-Heizzentrale ist in kürzester Zeit möglich.

Der Heizkreislauf und/oder Brauchwasserkreislauf ist in die Heizzentrale hinein und durch den Heizkessel hindurch zu führen. Entsprechend weist das Leitungssystem des Heizkreislaufes und/oder Brauchwasserkreislaufes einen Vor- und einen Rücklauf zum Heizkessel auf. Die Wärmepumpe ist mit dem Vor- und/oder dem Rücklauf dieses Leitungssystems gekoppelt, um eine Erwärmung des Heizkreislaufes und/oder Brauchwasserkreislaufes zu ermöglichen.

Das Gehäuse kann in der Art eines Rahmens bzw. einer Verkleidung geschlossen und auch teilweise offen ausgebildet sein. Auch ist es möglich, dass einige der Komponenten innerhalb des Gehäuses einen Teil des eigentlichen, äußeren Gehäuses bilden.

Der Brennwertkessel umfasst einen Heizkessel mit einem Brenner und einer Brennkammer und einem Nachschaltwärmetauscher. Grundsätzlich kann als Heizkessel jeder geeignete, aus dem Stand der Technik bekannte Heizkessel verwendet werden. Bei Brennwertkesseln wird im Gegensatz zu herkömmlichen Heizkesseln zusätzlich auch die Kondensationswärme des Wasserdampfes im Abgas genutzt. Hierdurch wird der Gesamtwirkungsgrad verbessert. Hierzu werden Nachschaltwärmetauscher für Heizkessel vorgesehen, die zum Kühlen und Kondensieren von Abgasen eines Brenners des Heizkessels ausgebildet sind. Der Begriff "Nachschaltwärmetauscher für Heizkessel" bringt zum Ausdruck, dass der Wärmetauscher einem Heizkessel nachgeschaltet ist. Auch ist es üblich, derartige Wärmetauscher als "Restwärmetauscher" zu bezeichnen. Beispielsweise können diese Wärmetauscher als Rohrbündelwärmetauscher ausgebildet sein.

Im Gegensatz zu den aus dem Stand der Technik bekannten Heizzentralen und Heizanlagen kann bei der vorliegenden Erfindung die Heizzentrale und somit auch die gesamte Heizanlage ohne einen separaten Pufferspeicherbehälter ausgeführt werden. Hierfür werden die Rohrleitungen des Heizkreises und/oder des Brauchwasserkreises des Gebäudes in die Heizzentrale hinein zum Heizkessel geführt, so dass das Heiz- und/oder Brauchwasser durch den Heizkesselkörper hindurchströmt. Durch die thermische Energie der Verbrennung innerhalb der Brennkammer wird das durch den Heizkessel fließende Wärmeträgermedium, in der Regel Wasser, erwärmt. Der Pufferspeicher umfasst bei der vorliegenden, erfindungsgemäßen Heizzentrale somit nicht in einem separaten Behältnis gelagertes Heizwasser, sondern einzig das durch den Heizkessel bzw. die Heizzentrale geführte Heiz- und/oder Brauchwasser. Gegebenenfalls kann Wärmeenergie zusätzlich im Heizkesselkörper gespeichert werden.

Wärmepumpen sind im Allgemeinen Vorrichtungen, die unter Zufuhr von Energie Wärme von einem niedrigeren Temperaturniveau auf ein höheres heben (pumpen). Die Bereitstellung der Heizwärme erfolgt durch Verdampfung eines Kältemittels in einem Verdampfer, welches anschließend in einem Kompressor oder Verdichter komprimiert wird, wodurch sich das Kältemittel weiter erwärmt. Nachfolgend wird dem Kältemittel im Verflüssiger die Wärme entzogen und auf ein Wärmeträgermedium, beispielsweise Heizungswasser oder Brauchwasser, übertragen. Das verflüssigte Kältemittel wird anschließend in einem Drosselorgan entspannt und wiederum von Neuem dem Verdampfer zugeführt. Insbesondere im Zuge der verstärkten Verbreitung erneuerbarer Energien werden Wärmepumpen zunehmend häufiger zur Erwärmung und/oder Kühlung von Gebäuden bzw. von Heizwasser- und/oder Brauchwasserkreisläufen eingesetzt. Bei der erfindungsgemäßen Heizzentrale kann die Wärmepumpe derart ausgebildet sein, dass sie auch im reversiblen Betrieb fahrbar ist und somit eine Kühlung anstatt einer Erwärmung bewirkt. Zweckmäßigerweise ist bei einer derartigen Ausbildungsform ein Schaltmittel, insbesondere ein Ventil vorgesehen, mit dem die Wärmepumpe wahlweise von einem Betriebszustand zum anderen schaltbar ist. Grundsätzlich kann die Heizzentrale im reversiblen Betrieb derart geschaltet sein, dass der Heizwasser- und/oder Brauchwasserkreislauf nur durch die Wärmepumpe, und nicht mehr durch den Heizkessel läuft. Alternativ kann der Kreislauf jedoch auch weiterhin zusätzlich zur Wärmepumpe auch durch den abgeschalteten Heizkessel laufen, wobei dann der Heizkesselkörper gegebenenfalls als Kältespeicher dienen kann.

Eine mögliche Ausführungsart derartiger Wärmepumpen sind die sogenannten Luft-/Wasserwärmepumpen, bei denen mittels einer außerhalb des zu erwärmenden bzw. kühlenden Gebäudes angeordneten Außeneinheit der Umgebungsluft Wärme entzogen wird. Die Außeneinheit ist mittels Kühlmittelleitungen mit einer Inneneinheit der Luft-/Wasserwärmepumpe verbunden, an die die Wärmeenergie mittels des Kühlmittels transferiert und dort an den Heizkreislauf und/oder Brauchwasserkreislauf abgegeben wird. Eine Inneneinheit einer derartigen Wärmepumpe ist erfindungsgemäß innerhalb der Kompakt-Heizzentrale angeordnet. Ferner weist die Inneneinheit der Wärmepumpe erfindungsgemäß einen Verflüssiger und die Außeneinheit einen Verdichter und einen Verdampfer auf. Durch den in der Inneneinheit vorgesehenen Verflüssiger bzw. Kondensator, der beispielsweise als Rohrbündel- oder Plattenwärmetauscher ausgebildet sein kann, wird die im Kältemittel vorhandene Wärmeenergie auf ein weiteres Wärmeträgermedium, beispielsweise Heizwasser oder Brauchwasser, übertragen. Im Gegensatz dazu nimmt der in der Außeneinheit angeordnete Verdampfer, der ebenfalls als Wärmetauscher bzw. Wärmeübertrager ausgebildet sein kann, Energie aus der Umgebungsluft auf. Wird die Wärmepumpe im reversiblen Betrieb gefahren, dient der außerhalb des Gebäudes in der Außeneinheit angeordnete Verdampfer als Verflüssiger und der im Gebäude in der Inneneinheit angeordnete Verflüssiger als Verdampfer.

Vorteilhaft ist hierbei, dass der Verdichter bzw. Kompressor zusammen mit dem Verdampfer in der Außeneinheit, d. h. außerhalb des Gebäudes, vorgesehen ist. Hierdurch wird erreicht, dass die in der Heizzentrale angeordnete Inneneinheit der Wärmepumpe sehr klein ausgebildet sein kann, wodurch die Heizzentrale insgesamt noch kompakter ausgebildet werden kann. Weiterhin wird dadurch erreicht, dass der Betriebsgeräuschpegel der Heizzentrale deutlich gesenkt wird und die Heizzentrale somit nicht als unangenehm von sich im Gebäude aufhaltenden Personen empfunden wird.

Die Kompakt-Heizzentrale weist erfindungsgemäß sowohl eine konventionelle Wärmequelle (Brennwertkessel) sowie eine Wärmequelle, die den erneuerbaren Energien zuordbar ist (Wärmepumpe), auf und entspricht somit den Anforderungen, die an moderne Niedrigenergiehäuser gestellt werden. Gleichzeitig kann die Heizzentrale mit den beiden genannten Wärmequellen, durch die spezielle Ausbildungsform ohne separaten Pufferspeicherbehälter, kompakt in einem Gehäuse als eine einzelne Einheit ausgebildet werden, was den Raum- und Installationsbedarf und damit die Gesamtkosten deutlich reduziert. Insofern eignet sich die vorliegende Erfindung auch insbesondere zur Modernisierung der Heizanlagen von Bestandsbauten, bei denen zum einen der Gesamtwirkungsgrad der Heizanlage erhöht werden soll und zum anderen nur ein geringes Platzangebot für die Installation von Heizanlagen bzw. Heizzentralen besteht.

Die Heizzentrale kann grundsätzlich als ein fertiges Bauteil ausgeführt sein, das als solches in einem Stück in dem jeweiligen Gebäude installierbar ist. Jedoch ist es auch möglich, die Heizzentrale in Modulbauweise auszuführen, so dass die einzelnen Komponenten der Zentrale vor Ort im Zuge der Montage in einem dafür vorgesehenen Rahmen bzw. in einem dafür vorgesehenen Gehäuse installiert bzw. montiert werden.

Bevorzugte Ausführungsformen der Erfindung sind in den Unteransprüchen gekennzeichnet.

In einer bevorzugten Ausführungsform ist der Heizkessel als Zwei- oder Dreizugheizkessel ausgeführt. Bei derartigen Heizkesseln werden die bei der Verbrennung entstehenden heißen Abgase über zwei bzw. drei Züge innerhalb des Heizkessels geführt, um dadurch möglichst große Wärmeübertragungsflächen zu dem durch den Kessel geleiteten Wasser des Heizkreises bzw. Brauchwasserkreises zu schaffen. Hierfür wird der Abgasstrom im Heizkessel ein- oder zweimal umgelenkt.

Zweckmäßigerweise besteht der Körper des Heizkessels aus Metall. Der Heizkesselkörper stellt den gesamten Grundkörper des Heizkessels dar und umfasst sowohl die Brennkammer als auch Hohlräume bzw. Kammern, durch die die heißen Abgase bzw. das zu erwärmende Wärmeträgermedium strömen bzw. fließen können. Insbesondere ist es bevorzugt, diesen aus Gusseisen auszubilden. Hierdurch kann der Heizkesselkörper selbst, zusätzlich zum Heizwasser bzw. Brauchwasser, das durch den Heizkessel strömt, als Puffer- bzw. Wärmespeicher genutzt werden. D. h., bei der thermischen Verbrennung innerhalb der Brennkammer wird neben dem Heiz- bzw. Brauchwasser auch der Heizkesselkörper als solcher erwärmt und als Wärmespeicher verwendet, der ebenfalls Wärme an das Heiz- bzw. Brauchwasser abgeben kann. Die Speicherkapazität eines Gusseisenkörpers ist hierbei besonders vorteilhaft.

Zweckmäßigerweise ist der Heizkessel als Öl-, Gas- oder Feststoff-Heizkessel ausgebildet. Ein für die Heizzentrale zu verwendender, geeigneter Öl-Brennwertkessel könnte beispielsweise eine maximale Nennwärmebelastung von 26,5 kW aufweisen. Als Feststoffheizkessel können beispielsweise Pelletsheizsysteme u. dgl. verwendet werden.

Bevorzugterweise werden ferner ein oder mehrere Schaltmittel, insbesondere Ventile u. dgl.,- vorgesehen, um zu ermöglichen, dass die Inneneinheit der Wärmepumpe und/oder der Brennkessel bei Bedarf hydraulisch zu- oder abgeschaltet werden können. So ist es beispielsweise zweckmäßig, die Erwärmung des Gebäudes allein durch die Wärmepumpe vorzunehmen, solange der Wärmebedarf in einem moderaten Bereich liegt (beispielsweise im Herbst oder Frühling). Sollte der Wärmebedarf die Leistungsfähigkeit der Wärmepumpe überschreiten, kann der Brennwertkessel hydraulisch hinzugeschaltet werden.

Einer der wesentlichen Vorteile der erfindungsgemäßen Heizzentrale ist ihre kompakte Ausbildung, die einen äußerst geringen Raumbedarf nach sich zieht. Entsprechend weist das Gehäuse der Heizzentrale vorteilhafterweise ein Innenvolumen von 0,3 m³ bis 1,5 m³, bevorzugt 0,4 m³ bis 1,0 m³, besonders bevorzugt 0,5 m³ bis 0,75 m³, auf.

In einer weiteren bevorzugten Ausführungsform sind Anschlüsse an der Heizzentrale vorgesehen, mit denen weitere, externe Wärmequellen, insbesondere ein Solar-Kollektor-System, und/oder ein externer Pufferspeicherbehälter an die Heizzentrale angeschlossen werden können. Hierdurch wird die erfindungsgemäße Heizzentrale noch flexibler einsetzbar und kann insbesondere in bereits bestehende Systeme integriert werden.

Zweckmäßigerweise ist in der Heizzentrale eine Regelungseinrichtung integriert, die zur Regelung der verschiedenen Wärmequellen bzw. Heiz- und/oder Brauchwasserkreise ausgebildet ist. Hierdurch werden die Bedienungsfreundlichkeit der Heizzentrale sowie die Einfachheit der Installation bzw. Montage weiter verbessert. Da die Regelungseinrichtung bereits in der Heizzentrale integriert ist, ist diese zweckmäßigerweise bereits vorprogrammiert, so dass sie die vorhandenen bzw. anzuschließenden Wärmequellen nach einem im Vorwege festgelegten Ablauf regelt bzw. an-steuert.

Vorteilhafterweise ist die erfindungsgemäße Kompakt-/Heizzentrale in die Heizanlage eines Gebäudes integrierbar. Heizanlagen von Gebäuden können dabei weitere, externe Wärmequellen, externe Pufferspeicherbe-hälter u. dgl. aufweisen, die zu einer Gesamtheizanlage mit der Kompakt-/Heizzentrale verbindbar sind.

Weiterhin sieht die Erfindung ein Verfahren zum Nachrüsten einer Kompakt-Heizzentrale für eine Heizanlage zur Wärmeenergieversorgung von Gebäuden vor, wobei die nachzurüstende Heizzentrale ein Gehäuse aufweist, innerhalb dessen ein Brennwertkessel, umfassend einen Heizkessel mit einem Brenner und einer Brennkammer, ein Nachschaltwärmetauscher und kein separater Pufferspeicherbehälter angeordnet sind. Bei einer derartigen Heizzentrale wird verfahrensgemäß zusätzlich innerhalb des Gehäuses eine Inneneinheit einer Wärmepumpe vorgesehen, die zur Erwärmung eines durch den Heizkesselkörper geführten Heizkreises und/oder Brauchwasserkreises mit dem Heizkreis und/oder Brauchwasserkreis gekoppelt wird. Hierdurch ist es möglich, bereits bestehende Heizzentralen entsprechend umzurüsten, so dass sich die erfindungsgemäßen Vorteile ergeben. Bei dem erfindungsgemäßen Verfahren ist vorgesehen, dass die Inneneinheit der Wärmepumpe mittels Kühlmittelleitungen mit einer Außeneinheit verbunden wird, und dass ein Verflüssiger in der Inneneinheit und ein Verdichter und ein Verdampfer in der Außeneinheit vorgesehen wird.

Ausführungsbeispiele der Erfindung werden nachstehend anhand der Zeichnungen näher erläutert. Es zeigen schematisch:
- Fig. 1: einen Hydraulikplan einer ersten Ausführungsform einer Kompakt-Heizzentrale;
- Fig. 2: einen Hydraulikplan einer zweiten Ausführungsform einer Kompakt-Heizzentrale; und
- Fig. 3: eine geschnittene Seitenansicht eines Heizkessels für eine Kompakt-Heizzentrale.

Bei den im Folgenden beschriebenen, verschiedenen Ausführungsformen der Erfindung werden gleiche Bestandteile mit gleichen Bezugszeichen bezeichnet.

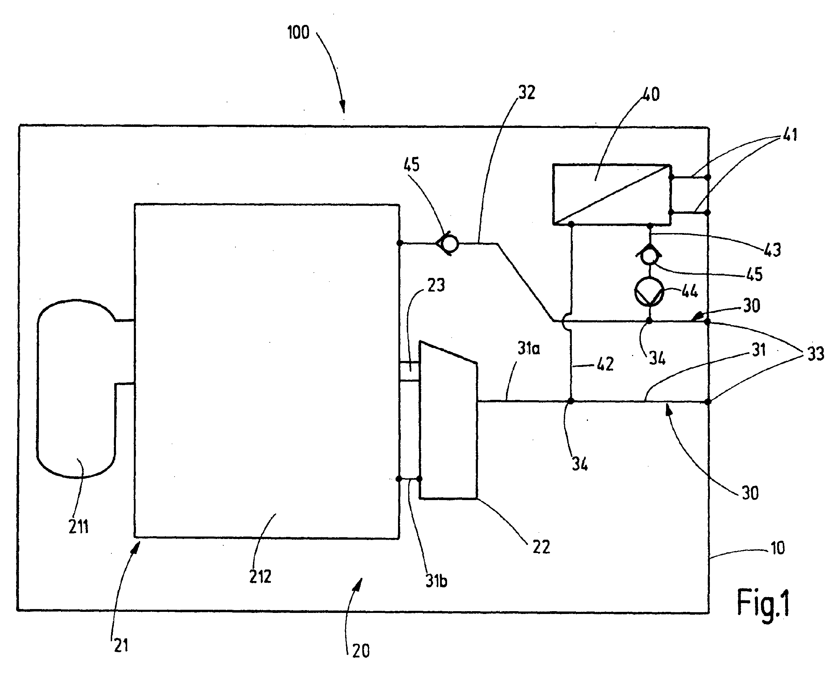

Fig. 1 zeigt einen Hydraulikplan einer ersten Ausführungsform einer erfindungsgemäßen Heizzentrale 100. Die Kompakt-Heizzentrale umfasst ein in sich geschlossenes Gehäuse 10, innerhalb dessen sämtliche Komponenten bzw. Bauteile der Kompakt-Heizzentrale 100 angeordnet sind. Entsprechend ist innerhalb des Gehäuses 10 ein Brennwertkessel 20 angeordnet. Der Brennwertkessel 20 umfasst zum einen einen Heizkessel 21, der wiederum einen Brenner 211 und eine Brennkammer 212 umfasst. Im vorliegenden Ausführungsbeispiel ist der Heizkessel als Öl-Heizkessel ausgebildet. Das bei der Verbrennung innerhalb der Brennkammer 212 entstehende Abgas wird über ein Abgasrohr 23 zu einem Nachschaltwärmetauscher 22 geführt. Im Nachschaltwärmetauscher 22 wird das Abgas aus der Brennkammer 212 des Heizkessels 21 abgekühlt und kondensiert.

Ein Heizwasserkreis 30, bestehend aus einer (Rohr-)Leitung mit darin fließendem Heizwasser wird in die Kompakt-Heizzentrale 100 hinein- und aus dieser wieder herausgeführt. Entsprechend weist der Heizkreis 30 einen aus Rücklaufabschnitten 31 a, 31 b bestehenden Rücklauf 31 auf, durch den kaltes Wasser in die Kompakt-Heizzentrale 100 hineingeführt wird. Der Rücklaufabschnitt 31 a führt zum Nachschaltwärmetauscher 22. Dort wird das Wasser durch die Kondensationswärme des Abgases (vor- )erwärmt, bevor es über einen weiteren Rücklaufabschnitt 31 b in den Heizkessel 21 geführt wird. Durch die thermische Verbrennungswärme innerhalb des Heizkessels 21 wird das in den Heizkessel 21 hinein und durch den Heizkesselkörper hindurch geführte Heizwasser erwärmt und fließt durch einen Vorlauf 32 wieder aus dem Heizkessel 21 und weiter aus der Kompakt-Heizzentrale 100 hinaus. Der Rücklauf 31 und der Vorlauf 32 weisen Anschlüsse 33 auf, die an der Außenseite des Gehäuses 10 angebracht sind und über die die Kompakt-Heizzentrale 100 mit einem Heizwasserkreis eines Gebäudes (hier nicht dargestellt) verbindbar ist.

Ferner ist innerhalb des Gehäuses 10 die Inneneinheit 40 einer Wärmepumpe vorgesehen. Die Inneneinheit 40 umfasst vorliegend einzig einen Verflüssiger, der als Wärmetauscher ausgebildet ist. Die Inneneinheit 40 der Wärmepumpe ist über Kühlmittelleitungen 41 mit einer außerhalb des zu erwärmenden Gebäudes angeordneten Außeneinheit der Wärmepumpe (hier nicht dargestellt) verbunden. Ferner weist die Inneneinheit 40 der Wärmepumpe einen Wärmepumpenrücklauf 42 auf, der mittels eines T-Stückes 34 mit dem Rücklaufabschnitt 31 a des Heizkreises 30 verbunden ist. Das in den Wärmetauscher 40 eingeführte, kalte Wasser des Heizkreises 30 wird dort erwärmt und über einen Wärmepumpenvorlauf 43 und ein weiteres T-Stück 34 an den Vorlauf 32 des Heizkreises 30 weitergeleitet. Im Vorlauf 43 ist ferner eine Umwälzpumpe 44 zum Pumpen des Heizwassers durch den Wärmepumpenkreislauf vorgesehen. Weiterhin ist im Vorlauf 32 des Heizkreises sowie im Vorlauf 43 des Wärmepumpenkreises jeweils ein Rückschlagventil 45 angeordnet. Hierdurch wird verhindert, dass das bereits erwärmte Wasser in die falsche Richtung strömen kann. Demnach ist es bei der Ausführungsform gemäß Fig. 1 möglich, dass das Heizwasser im Parallelbetrieb sowohl durch den Brennwertkessel 20 als auch durch die Wärmepumpe erhitzt wird.

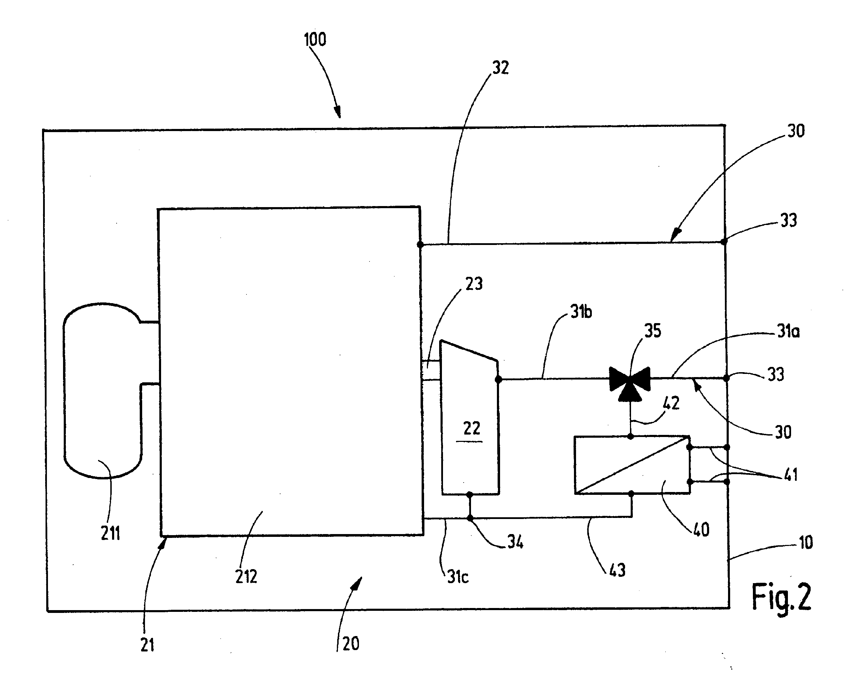

Fig. 2 zeigt ein weiteres Ausführungsbeispiel einer erfindungsgemäßen Kompakt-Heizzentrale 100. Bezüglich der Ausgestaltung des Brennwertkessels 20 stimmen die beiden Ausführungsformen im Wesentlichen überein. Im Gegensatz zur Ausführungsform gemäß Fig. 1 speist jedoch bei der dargestellten Ausführungsform gemäß Fig. 2 die Inneneinheit 40 der Wärmepumpe das erwärmte Wasser in den aus Rücklaufabschnitten 31 a, 31 b, 31 c bestehenden Rücklauf 31 und nicht in den Vorlauf 32 des Heizkreises 30 ein. Dafür ist im Rücklauf 31 ein Dreiwegeventil 35 vorgesehen, das die beiden Rücklaufabschnitte 31 a, 31 b des Heizkreises 30 und den Wärmepumpenrücklauf 42 miteinander verbindet. Das Dreiwegeventil 35 ist ansteuerbar ausgebildet. Der Leitungsabschnitt 31 b des Heizkreises 30 führt vom Dreiwegeventil 35 weiter zum Nachschaltwärmetauscher 22. Das im Nachschaltwärmetauscher 22 erwärmte Heizwasser wird über einen weiteren Rücklaufabschnitt 31 c zum Heizkessel 21 geführt. Das durch den Rücklauf 42 zum Wärmetauscher 40 fließende Wasser wird dort erwärmt und über den Wärmepumpenvorlauf 43 weiter zum Abschnitt 31 c des Heizkreisrücklaufes 31 geleitet. Der Wärmepumpenrücklauf 43 ist mit einem T-Stück 34 mit dem Abschnitt 31 c verbunden. Somit wird bei dieser Ausführungsform das Rücklaufheizwasser parallel vom Nachschaltwärmetauscher 22 und vom Wärmetauscher 40 der Wärmepumpe (vor-)erwärmt, bevor es in den Heizkessel 21 fließt.

Bei der Ausführungsform gemäß Fig. 2 ist es ebenso wie bei der Ausführungsform gemäß Fig. 1 möglich, den Heizwasserkreis 30 nur mittels der Wärmepumpe, nur mittels des Heizkessels 21 oder mit beiden genannten Wärmequellen gleichzeitig zu erwärmen.

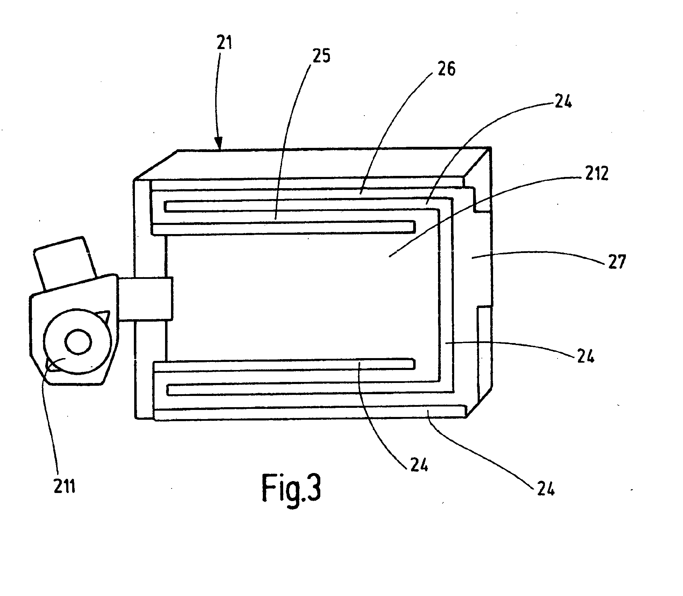

Fig. 3 zeigt eine geschnittene, perspektivische Seitenansicht eines Heizkessels 21, wie er beispielsweise in der Ausführungsform gemäß Fig. 1 und 2 Verwendung findet. Der dargestellte Heizkessel 21 ist als ein sogenannter Dreizugheizkessel ausgebildet und weist einen Ölbrenner 211 und eine Brennkammer 212 auf. In der Brennkammer 212 findet eine thermische Verbrennung statt. Diese Brennkammer 212 stellt den ersten Zug dar. Am Ende der Brennkammer 212 werden die Abgase um ca. 180° umgelenkt und strömen entlang des zweiten Zuges 25 zurück Richtung Brenner 211. Am Ende des zweiten Zuges 25 wird der Abgasstrom wiederum umgelenkt und strömt entlang des dritten Zuges 26 bis zu einem Sammelbereich 27, von wo das Abgas aus dem Heizkessel 21 hinausgeführt wird. Die zweiten und dritten Züge 25, 26 sind als Leitungen für den Abgasstrom ausgebildet und können beispielsweise als ein umlaufend angeordnetes Bündel von Rohren oder sonstigen Hohlleitern ausgebildet sein. Das in den Heizkessel 21 eingebrachte Heizwasser fließt durch die Zwischenräume 24 zwischen den einzelnen Zügen, die im Heizkesselkörper vorgesehen sind, hindurch. Daher bilden diese Zwischenräume 24 einen Teil des Leitungssystems des Heizwasserkreises. Durch die zweifache Umlenkung der Abgasströme wird sichergestellt, dass eine möglichst große Wärmeübertragungsfläche zur Verfügung steht. Der Heizkesselkörper des Heizkessels 21 dient neben dem im Heizkessel 21 vorhandenen Heizwasser als Wärme- bzw. Pufferspeicher für die Kompakt-/Heizzentrale.

### Bezugszeichenliste

- 100: Kompakt-Heizzentrale

- 10: Gehäuse

- 20: Brennwertkessel
- 21: Heizkessel
- 211: Brenner
- 212: Brennkammer
- 22: Nachschaltwärmetauscher
- 23: Abgasrohr
- 24: Zwischenräume
- 25: zweiter Zug
- 26: dritter Zug
- 27: Sammelbereich

- 30: Heizkreis
- 31: Rücklauf
- 31 a, 31 b, 31 c: Rücklaufabschnitte
- 32: Vorlauf
- 33: Anschlüsse
- 34: T-Stück
- 35: Dreiwegeventil

- 40: Inneneinheit / Wärmepumpe
- 41: Kühlmittelleitungen
- 42: Wärmepumpenrücklauf
- 43: Wärmepumpenvorlauf
- 44: Pumpe
- 45: Rückschlagventil

## Patentansprüche

1. Kompakt-Heizzentrale (100) für eine Heizanlage zur Wärmeenergieversorgung von Gebäuden, mit einem Heizkessel (21) mit einem Brenner (211) und einer Brennkammer (212), bei der ein zu einem Heizkreislauf (30) und/oder Brauchwasserkreislauf gehörendes, einen Vor- und einen Rücklauf (32, 31) aufweisendes Leitungssystem zur Erwärmung des in der Leitung vorhandenen Wärmeträgermediums durch den Heizkessel (21) hindurch geführt ist, wobei die Kompakt-Heizzentrale (100) einen Brennwertkessel (20), umfassend den Heizkessel (21) und einen Nachschaltwärmetauscher (22), aufweist, wobei die Kompakt-Heizzentrale (100) ein Gehäuse (10) aufweist, innerhalb dessen der Brennwertkessel (20) und eine Inneneinheit (40) einer Wärmepumpe, insbesondere einer Luft-/Wasserwärmepumpe, angeordnet sind, wobei innerhalb des Gehäuses (10) der Kompakt-Heizzentrale (100) kein vom Brennwertkessel (20) separater, ein separates Behältnis aufweisender Pufferspeicherbehälter vorgesehen ist, und wobei die Inneneinheit der Wärmepumpe (40) mit dem Vor- und/oder dem Rücklauf (31,32) des Leitungssystems zur Erwärmung des Heizkreislaufes (30) und/oder Brauchwasserkreislaufes gekoppelt ist, **dadurch gekennzeichnet, dass** die Wärmepumpe eine mittels Kühlmittelleitungen (41) mit der Inneneinheit (40) verbundene Außeneinheit umfasst, und dass ein Verflüssiger in der Inneneinheit (40) und ein Verdichter und ein Verdampfer in der Außeneinheit vorgesehen sind.

2. Heizzentrale gemäß Anspruch 1,
**dadurch gekennzeichnet,**
**dass** der Heizkessel (21) ein Zwei- oder ein Dreizugheizkessel ist.

3. Heizzentrale gemäß Anspruch 1 oder 2,
**dadurch gekennzeichnet,**
**dass** der Heizkesselkörper aus Gusseisen ist.

4. Heizzentrale gemäß einem der vorhergehenden Ansprüche,
**dadurch gekennzeichnet,**
**dass** der Heizkessel (21) ein Öl-, Gas- oder Feststoff-Heizkessel ist.

5. Heizzentrale gemäß einem der vorhergehenden Ansprüche,
**dadurch gekennzeichnet,**
**dass** im Leitungssystem ein oder mehrere Schaltmittel, insbesondere Ventile, vorgesehen sind, um die Inneneinheit der Wärmepumpe (40) und/oder den Brennwertkessel (20) bei Bedarf hydraulisch zu- oder abzuschalten.

6. Heizzentrale gemäß einem der vorhergehenden Ansprüche,
**dadurch gekennzeichnet,**
**dass** das Gehäuse (10) ein Innenvolumen von 0,3 m³ bis 1,5 m³, bevorzugt 0,4 m³ bis 1,0 m³, besonders bevorzugt 0,5 m³ bis 0,75 m³, aufweist.

7. Heizzentrale gemäß einem der vorhergehenden Ansprüche,
**dadurch gekennzeichnet,**
**dass** Anschlüsse zum Anschluss eines externen Pufferspeicherbehälters und/oder weiterer Wärmequellen, insbesondere eines Solar-Kollektor-Systems, vorgesehen sind.

8. Heizzentrale gemäß einem der vorhergehenden Ansprüche,
**dadurch gekennzeichnet,**
**dass** die Heizzentrale (100) eine Regelungseinrichtung umfasst, die zur Regelung der verschiedenen Wärmequellen ausgebildet ist.

9. Heizanlage,
**dadurch gekennzeichnet,**
**dass** die Heizanlage eine Heizzentrale (100) nach einem der vorhergehenden Ansprüche umfasst.

10. Verfahren zum Nachrüsten einer Kompakt-Heizzentrale (100) für eine Heizanlage zur Wärmeenergieversorgung von Gebäuden mit einem Gehäuse (10), innerhalb dessen ein Brennwertkessel (20), umfassend einen Heizkessel (21) mit einem Brenner (211) und einer Brennkammer (212), und ein Nachschaltwärmetauscher (22) angeordnet sind, wobei innerhalb des Gehäuses (10) kein vom Brennwertkessel separater, ein separates Behältnis aufweisender Pufferspeicherbehälter angeordnet wird, bei dem innerhalb des Gehäuses (10) eine Inneneinheit einer Wärmepumpe (40) vorgesehen wird, die zur Erwärmung eines durch den Heizkessel (21) hindurch geführten Heizkreises (30) und/oder Brauchwasserkreise mit dem Heizkreis (30) und/oder Brauchwasserkreis gekoppelt wird, **dadurch gekennzeichnet, dass** die Inneneinheit (40) der Wärmepumpe mittels Kühlmittelleitungen (41) mit einer Außeneinheit verbunden wird, und dass ein Verflüssiger in der Inneneinheit (40) und ein Verdichter und ein Verdampfer in der Außeneinheit vorgesehen wird.

## Claims

1. Compact heating system (100) for a heating installation to supply buildings with heat energy, with a heating boiler (21) with a burner (211) and a burner chamber (212), in which a line system belonging to a heating circuit (30) and/or a service water circuit and having a feed line and a return line (32, 31) is directed through the heating boiler (21) for heating the heat transfer medium present in the line, wherein the compact heating system (100) has a calorific value boiler (20) comprising the heating boiler (21) and an add-on heat exchanger (22), wherein the compact heating system (100) has a housing (10) in which the calorific value boiler (20) and an internal unit (40) of a heating pump, in particular an air/water heating pump, are arranged, wherein no buffer storage tank separate from the calorific value boiler (20) and having a separate tank is provided within the housing (10) of the compact heating system (100), and wherein the internal unit of the heating pump (40) is coupled to the feed line and/or the return line (31, 32) of the line system for heating the heating circuit (30) and/or the service water circuit, **characterized in that** the heating pump comprises an external unit connected to the internal unit (40) via coolant lines (41), and that a liquefier is provided in the internal unit (40) and a compressor and an evaporator are provided in the external unit.

2. Heating system according to claim 1, **characterized in that** the heating boiler (21) is a two- or a three-pass heating boiler.

3. Heating system according to claim 1 or 2, **characterized in that** the heating boiler body is made of cast iron.

4. Heating system according to any one of the preceding claims, **characterized in that** the heating boiler (21) is an oil, gas or solid fuel boiler.

5. Heating system according to any one of the preceding claims, **characterized in that** one or more switching means, in particular valves, are provided in the line system to hydraulically enable or disable the internal unit of the heating pump (40) and / or the calorific value boiler (20), if necessary.

6. Heating system according to any one of the preceding claims, **characterized in that** the housing (10) has an internal volume of 0.3 m³ to 1.5 m³, preferably 0.4 m³ to 1.0 m³, particularly preferably 0.5 m³ to 0.75 m³.

7. Heating system according to any one of the preceding claims, **characterized in that** connectors are provided for connecting an external buffer storage tank and / or other heat sources, in particular a solar collector system.

8. Heating system according to any one of the preceding claims, **characterized in that** the heating system (100) comprises a control device configured for controlling the various heat sources.

9. Heating installation **characterized in that** the heating installation comprises a heating system (100) according to any one of the preceding claims.

10. Method for retrofitting a compact heating system (100) for a heating installation to supply buildings with heat energy with a housing (10), in which a calorific value boiler (20) comprising a heating boiler (21) with a burner (211) and a burner chamber (212) and an add-on heat exchanger (22) are arranged, wherein no buffer storage tank separate from the calorific value boiler and having a separate tank is arranged within the housing (10), wherein within the housing (10), an internal unit of a heating pump (40) is provided, which is coupled to a heating circuit (30) and/or a service water circuit directed through the heating boiler (21) for heating the heating circuit (30) and/or the service water circuit, **characterized in that** the internal unit (40) of the heating pump is connected to an external unit via coolant lines (41), and that a liquefier is provided in the internal unit (40) and a compressor and an evaporator are provided in the external unit.

## Revendications

1. Centrale de chauffage compacte (100) pour une installation de chauffage pour l'alimentation en énergie thermique de bâtiments, comprenant une chaudière (21) avec un brûleur (211) et une chambre de combustion (212), dans laquelle un système de conduite pour chauffer le fluide caloporteur présent dans la conduite, présentant une conduite aller et une conduite retour (32, 31) et appartenant à un circuit de chauffage (30) et/ou à un circuit d'eau de traitement, est guidé à travers la chaudière (21), la centrale de chauffage compacte (100) présentant une chaudière à condensation (20), comprenant la chaudière (21) et un échangeur de chaleur aval (22), la centrale de chauffage compacte (100) présentant un boîtier (10) à l'intérieur duquel sont disposées la chaudière à condensation (20) et une unité interne (40) d'une pompe à chaleur, en particulier d'une pompe à chaleur à air/eau, aucun récipient accumulateur tampon séparé de la chaudière à condensation (20), présentant un contenant séparé, n'étant prévu à l'intérieur du boîtier (10) de la centrale de chauffage compacte (100), et l'unité interne de la pompe à chaleur (40) étant accouplée à la conduite aller et/ou retour (31, 32) du système de conduite pour chauffer le circuit de chauffage (30) et/ou le circuit d'eau de traitement, **caractérisée en ce que** la pompe à chaleur comprend une unité externe connectée à l'unité interne (40) au moyen de conduites de réfrigérant (41), et **en ce qu'**un condenseur est prévu dans l'unité interne (40) et un compresseur et un évaporateur sont prévus dans l'unité externe.

2. Centrale de chauffage selon la revendication 1, caractérisée en ce quela chaudière (21) est une chaudière à double ou triple parcours.

3. Centrale de chauffage selon la revendication 1 ou 2, **caractérisée en ce que** le corps de chaudière est en fonte de fer.

4. Centrale de chauffage selon l'une quelconque des revendications précédentes, **caractérisée en ce que** la chaudière (21) est une chaudière à huile, gaz ou combustible solide.

5. Centrale de chauffage selon l'une quelconque des revendications précédentes, **caractérisée en ce qu'**un ou plusieurs moyens de commutation, notamment des soupapes, sont prévus dans le système de conduite, afin de connecter ou déconnecter hydrauliquement au besoin l'unité interne de la pompe à chaleur (40) et/ou la chaudière à condensation (20).

6. Centrale de chauffage selon l'une quelconque des revendications précédentes, **caractérisée en ce que** le boîtier (10) présente un volume interne de 0,3 m³ à 1,5 m³, de préférence de 0,4 m³ à 1,0 m³, particulièrement préférablement de 0,5 m³ à 0,75 m³.

7. Centrale de chauffage selon l'une quelconque des revendications précédentes, **caractérisée en ce que** des raccords pour le raccordement d'un récipient accumulateur tampon externe et/ou d'autres sources de chaleur, en particulier d'un système de collecteur solaire, sont prévus.

8. Centrale de chauffage selon l'une quelconque des revendications précédentes, **caractérisée en ce que** la centrale de chauffage (100) comprend un dispositif de régulation qui est réalisé pour réguler les différentes sources de chaleur.

9. Installation de chauffage, **caractérisée en ce que** l'installation de chauffage comprend une centrale de chauffage (100) selon l'une quelconque des revendications précédentes.

10. Procédé de montage en rattrapage d'une centrale de chauffage compacte (100) pour une installation de chauffage pour l'alimentation en énergie thermique de bâtiments, comprenant un boîtier (10) à l'intérieur duquel sont disposés une chaudière à condensation (20), comprenant une chaudière (21) avec un brûleur (211) et une chambre de combustion (212), et un échangeur de chaleur aval (22), aucun récipient accumulateur tampon séparé de la chaudière à condensation, présentant un contenant séparé, n'étant prévu à l'intérieur du boîtier (10), une unité interne d'une pompe à chaleur (40) étant prévue à l'intérieur du boîtier (10), laquelle, pour le chauffage d'un circuit de chauffage (30) et/ou d'un circuit d'eau de traitement guidé à travers la chaudière (21), est accouplée au circuit de chauffage (30) et/ou au circuit d'eau de traitement, **caractérisé en ce que** l'unité interne (40) de la pompe à chaleur est connectée à une unité externe au moyen de conduites de réfrigérant (41), et **en ce qu'**un condenseur est prévu dans l'unité interne (40) et un compresseur et un évaporateur sont prévus dans l'unité externe.
